# EUROPEAN PATENT APPLICATION

(11) **EP 1 296 117 A1**
(43) Date of publication of application: **26.03.2003**
(21) Application number: 02078198.5
(22) Date of filing: 05.08.2002
(51) Int. Cl.: G01D 5/353, G01L 1/24

(54) **Fibre optic sensor for monitoring a seam**

(30) Priority: 19.09.2001 BE 200100603
(71) Applicant: Voet, Marc, 2440 Geel (BE)
(72) Inventor: Voet, Marc, 2440 Geel (BE)
(74) Representative: Donné, Eddy

(57) **Abstract**

The invention relates to a method and sensor for watching a seam (7). On top of the seam (7), a strain sensor (8) is provided which comprises a strip (9) on which at least one optical fiber (11) is fixed according to a path which swerves to and fro in respect to the seam (7), which fiber is provided with so-called Bragg gratings which are provided in groups and whereby the Bragg gratings of each of the groups have a different specific wavelength than the Bragg gratings of the other groups. Light is directed through the optical fiber (11), and the spectral shifting of the light by the Bragg gratings is measured for the different specific wavelengths of the groups.

## Description

This invention relates to a method for watching a seam, in particular for detecting the moment when the strain, at the location of the seam, exceeds the limit whereby microtears can occur in this seam.

Amongst others, however, not exclusively, the invention relates to a method for watching a seam between two pipes of a pipeline, in particular the welded seam of a welded pipeline.

Such pipe conduits are, for example, oil pipelines, which are laid on the bottom of the sea and which connect to a drilling platform. These pipelines consist of sections of, for example, ten meters, which are welded to each other.

These pipelines, and in particular the part thereof which runs from the bottom of the sea up to the pump of the drilling platform, can be subjected to large traction forces, as a result of which tears in the welded seams may occur. Simply as a consequence of the pressure due to pumping, the pipes already will extend somewhat and, thus, the welded seams will be subjected to forces, as a result of which tears may occur. The pipeline also can be damaged by the waves, too, in particular at the height of the welded seams.

The detection of tears in these welded seams may take place by visual inspection, however, it is clear that such inspection is difficult to apply or not at all applicable to a pipe being in operation and situated under water, and in any case is time-consuming and expensive. Moreover, such inspection only can take place from time to time and not be performed continuously.

The invention aims at a method for watching a seam, which does not have the aforementioned disadvantages and allows to watch this seam continuously from a distance in a simple and precise manner.

According to the invention, this aim is achieved by a method for watching a seam, whereby, on top of the seam, an optical strain sensor is provided which comprises a strip upon which at least one optical fiber, which fiber is provided with so-called Bragg gratings, which are provided at a distance from each other, in successive groups, and whereby the Bragg gratings of each of the groups have another specific wavelength than the Bragg gratings of the other groups, is fixed according to a path which swerves to and fro in respect to the seam, in such a manner that the optical fiber crosses the seam several times, that light is directed through the optical fiber, and the spectral shifting of the light by the Bragg gratings is measured for the different specific wavelengths of the groups.

"Bragg gratings" are obtained by locally doping the core of the optical fiber with certain metal ions, for example, Germanium, and subsequently radiating it with a multidimensional UV pattern, such that small reflecting surfaces are formed in the core. Each pattern corresponds to a certain or specific wavelength band, whereby, spectrally, a part of the light is reflected on these small surfaces and a part of the light is let through (transmissive light).

When the optical fiber is subjected to an alteration by strain or temperature, the reflection of the light changes. Therefore, the strain and/or the temperature can be measured at the height of each Bragg grating, in consideration of the fact that these parameters thus alter the spectral pattern of the Bragg grating or, in other words, shift the wavelengths of the reflected or refracted light.

By means of a relatively inexpensive device for spectral analysis, a Fabry-Pérot interferometer, an optical discriminator or such, this spectral shifting can easily be measured. Principally, the optical fiber can be read at both extremities.

The use of optical fibers with Bragg gratings for detecting strain is known. The optical fiber is incorporated into the object which must be watched. It is also known to control cables situated under water by means of such optical fiber sensors in order to detect overloads on the cable. The optical fiber is incorporated into the cable.

By providing the optical fiber in a to-and-fro swerving path on a strip which is provided around the pipeline, it is possible to measure over a large surface.

Moreover, the area of a tear or excessive strain over the length of the seam, for example, the circumference of the seam of a pipeline, can be localized, as the optical fiber comprises Bragg gratings with different specific wavelengths.

The groups are distributed over the length of the seam, and the Bragg gratings of each group cover an area of the seam.

By using successively different wavelengths one after the other, the whole length of the seam is covered, and it can be determined in which group, and, thus, in which area, of the seam an excessive strain is occuring.

Preferably, a sensor is used with an optical fiber provided with Bragg gratings of the "tower type"; this is a fiber whereby the Bragg gratings are provided, for example, by radiating therein a hologram by means of a laser, onto the fiber which has been pressed through a mould and subsequently has been cured, before this fiber is covered with a coating or covering and is wound up.

Such type of optical fiber can be manufactured in a fast and simple manner and can comprise Bragg gratings with different specific wavelengths at small mutual interspaces. These fibers can resist a strain up to 5%.

In a particular form of embodiment, a sensor is used in which the optical fiber runs sinusoidally atop the strip.

The smaller the period of the sinus shape, the more precise the strain can be measured and, therefore, the seam can be watched.

In the sensor used according to the invention, preferably the optical fiber is provided in a capillary tube which then is fixed on the strip.

This capillary tube protects the optical fiber and allows to fix it in a simple manner, to wit by welding the tube, at the strip when this latter is made of metal, for example, of a foil of stainless steel.

If a seam in a metal pipeline is watched, this metal foil can be welded to the pipeline.

The invention also relates to a strain sensor for watching a seam, which sensor is appropriate for watching according to the aforementioned method.

This sensor is characterized in that it comprises a strip on which an optical fiber is fixed in a to-and-fro swerving manner, which fiber is provided with Bragg gratings, divided into successive groups of Bragg gratings which, from group to group, have a different specific wavelength.

The strip preferably is a metal foil, for example, a foil of stainless steel, and the optical fiber can be provided in a capillary tube which is fixed, for example, welded, onto this foil.

With the intention of better showing the characteristics of the invention, hereafter, as an example without any limitative character, a preferred form of embodiment of a method and a sensor for watching a seam according to the invention is described, with reference to the accompanying drawings, wherein:
figure 1 schematically represents a drilling platform with a pipeline, watched by means of the method according to the invention;
figure 2, at a larger scale, represents a part of the pipeline of figure 1, provided with an optical sensor according to the invention;
figure 3 schematically represents the entire watching device with the optical sensor;
figure 4, at a strongly enlarged scale, represents a cross-section according to line IV-IV in figure 2.

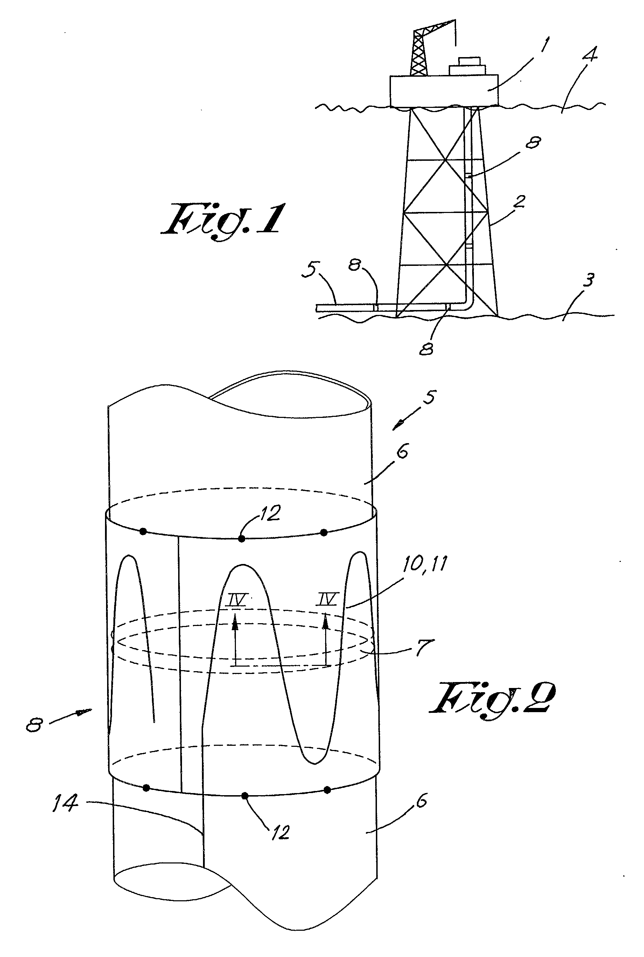

In figure 1, a drilling platform 1 is represented which, in the example, rests upon the bottom 3 of the sea 4 by means of a construction 2. Pumped-up oil is pumped away through a pipeline 5 which extends from the drilling platform 1 up to the bottom 3 and further lies upon this bottom 3. The pipeline 5 consists of steel pipes 6 with a length of, for example, ten meters, which are welded together with a welding seam 7.

Each of the welding seams 7 in the rising part of the pipeline 5, and possibly the welding seams 7 in the part of the pipeline 5 lying upon the bottom 3, are surrounded by an optical strain sensor 8 which allows to watch the welded seam 7 continuously.

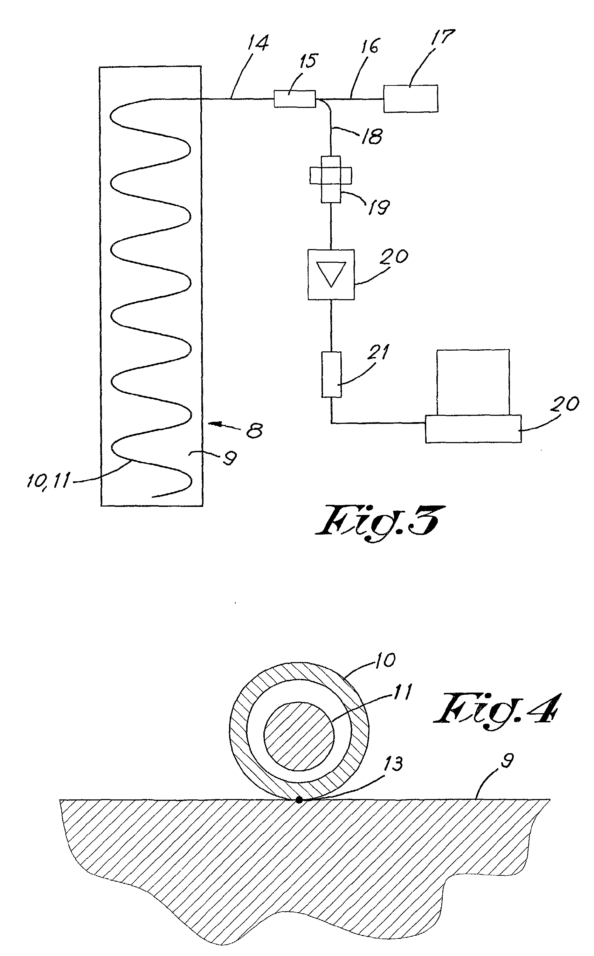

As represented in figures 2 to 4, the sensor 8 consists of a strip 9, formed by a foil of stainless steel, upon which a capillary tube 10 with therein an optical fiber 11, provided with Bragg gratings according to a sinusoidal path, is fixed.

The strip 9, which, above welded seam 7, completely surrounds the pipeline 5, is welded to this pipeline 5 by means of welding spots 12.

The optical fiber 11, for example, a glass fiber with a diameter of, for example, 200 micrometers, is glued into the capillary tube 10 which, for example, has an inner diameter of 300 micrometers.

The capillary tube 10 is fixed on the strip 9 by means of welding spots 13.

The optical fiber 11 is of the so-called "tower" type, whereby the fiber is drawn into a tower. Molten material is drawn through a mould and, after the curing of the fiber, however, before the covering thereof by a coating or a mantle, it is radiated for a short time with an UV pattern or with a laser hologram.

Bragg gratings are formed at regular short interspaces, for example, each centimeter, whereby after a group of a number, for example, ten to twenty, Bragg gratings with a certain specific wavelength, this is the wavelength for which the Bragg gratings form a selective filter, a successive group is manufactured with another specific wavelength, such that each group, which thus covers another area, i.e. another sector, of the welded seam 7, has another specific wavelength.

When the optical fiber 11, for example, has a length of 100 cm, it can be provided with ten groups of ten Bragg gratings with a mutual interspace of 1 cm and, thus, with ten different specific wavelengths.

As represented in figure 3, an extremity of the sensor 8 and, thus, an extremity of the sinusoidal optical fiber 11, is connected to a linear optical fiber 14 without Bragg gratings which extends along the pipeline 5 up to an extremity thereof, for example, up to the drilling platform 1.

At its extremity, for example, on the platform 1, this usual optical fiber 14 is provided with a coupling 15 which, on one hand, is connected by an optical fiber 16 to a broad-band light source 17, for example, a doped optical fiber source with a frequency width of 40 nm and, on the other hand, is connected by an optical fiber 18 to a spectral analyzing unit 19, for example, an optical spectral analyzer, a Fabry-Pérot interferometer or an optical discriminator, which in its turn, by means of an amplifier 20 and an interface 21, is connected to a computer 22.

Such optical sensor 8 is provided above each welded seam 7. The sensors 8 each are connected to a coupling 15, a light source 17 and an analyzing unit 19. By means of an alteration switch, the different sensors can be connected sequentially to one and the same light source 17 and analyzing unit 19. Several sensors 8 can be switched in series, whereby the extremities of the optical fibers 11 are connected to each other, and the groups of Bragg gratings in the different sensors 8 have different specific wavelengths.

When oil is pumped through the pipeline 5, the diameter of this pipeline, due to the pressure, will increase somewhat, as a result of which the strip 9, and, thus, the optical fiber 11, will be subjected to some tension.

The least strain of the pipeline 5 in the proximity of a welded seam 7 means a strain of the optical fiber 11 which crosses this welded seam 7. Due to the Bragg gratings, this last-mentioned strain causes an alteration of the wavelength and spectral pattern of the light directed through the optical fiber by the light source 17. This alteration is detected, more particularly, the shifting of the wavelength is measured by the spectral analyzing unit 19 which transmits the measured data through amplifier 20 and interface 21 towards the computer.

In particular when a crack occurs in the welded seam 7, said strain will be large.

When the measured strain exceeds a certain value which coincides with a crack or a possible crack, a warning can be issued.

As, in a sensor 8, the Bragg gratings are distributed over a sinusoidal path and are divided into groups with different specific wavelengths, it can be determined, by using successively different wavelengths coinciding with these specific wavelengths, in which sector of the circle-shaped welded seam 7 the strain or crack occurs.

This can be performed by directing light with these different wavelengths into the optical fiber 11 by means of the light source 17, or by directing normal light into the fiber 11, however, by subsequently examining the wavelengths by means of the analyzing unit 19.

Of course, the pipeline also will alter its length in function of the temperature. The temperature thus also influences the measured value.

By applying certain algorithms, possibly the influence of the temperature can be filtered out of the measuring of the strain.

The optical fiber 11 does not necessarily have to describe a sinusoidal path. This path also may be zigzagged or describe a block-shaped wave. However, it is important that the optical fiber 11 crosses the welded seam 7 several times over the circumference of the pipeline.

The welded seams 7 can be watched in a fast manner, and it can be immediately stated whether a welded seam 7 threatens to show tears or comprises tears, such that then a fast intervention is possible.

The pipeline 5 does not necessarily have to be of metal. The invention also can be applied to pipelines of synthetic material or carbon fiber, whereby the pipes are welded or glued together. The strip 9 then is glued to the pipes 6 of synthetic material.

Moreover, the invention is not limited to pipelines. It can, for example, also be applied for watching a seam between parts of tubular elements or between two beams, for example, a welded seam between profiled elements in a steel construction. In fact, it can be applied to any seam.

The Bragg gratings in the optical strain sensor 8 do not necessarily have to be of the "tower type". The optical fiber 11 may also be provided with mechanically written single Bragg gratings which are mounted in a similar serial configuration as the "tower" Bragg gratings. "Tower" Bragg gratings, however, allow to cover a larger surface to be watched.

The invention is in no way limited to the forms of embodiment described in the aforegoing and represented in the figures; on the contrary, such method and sensor for watching a seam can be realized in different variants, without leaving the scope of the invention.

## Claims

1. Method for watching a seam (7), **characterized in that** on top of the seam (7), an optical strain sensor (8) is provided which comprises a strip (9) on which at least one optical fiber (11), which fiber is provided with so-called Bragg gratings which are provided at mutual interspaces in successive groups and whereby the Bragg gratings of each of the groups have a different specific wavelength than the Bragg gratings of the other groups, is fixed according to a path which swerves to and fro in respect to the seam (7), in such a manner that the optical fiber (11) crosses the seam several times, light is directed through the optical fiber (11), and the spectral shifting of the light by the Bragg gratings is measured for the different specific wavelengths of the groups.

2. Method according to claim 1, **characterized in that** a sensor (8) is used with an optical fiber (11) which is provided with Bragg gratings of the "tower type", this is a fiber whereby the Bragg gratings are provided on the fiber, which has been pressed through a mould and subsequently has been cured, before this fiber is covered with a coating or mantle and is wound up.

3. Method according to claim 1 or 2, **characterized in that** a sensor (8) is used, the optical fiber (11) of which runs sinusoidally on the strip (9).

4. Method according to any of the preceding claims, **characterized in that** a sensor (8) is used, in which the optical fiber (11) is provided in a capillary tube (11) which then is fixed upon the strip (9).

5. Method according to claim 4, **characterized in that** the strip (9) is of metal and the capillary tube (10) is fixed upon the strip (9) by means of welding.

6. Method according to claim 5, **characterized in that** the strip (9) is a foil of stainless steel.

7. Method according to claim 4 or 5, **characterized in that** the pipeline (5) consists of steel and that the metal strip (9) is welded to the pipeline (5).

8. Method according to any of the preceding claims, **characterized in that** the spectral shift is measured by means of a spectral analyzing unit (19), for example, an optical spectral analyzer, a Fabry-Pérot interferometer or an optical discriminator, and that therefrom, the strain is determined.

9. Method according to any of the preceding claims, **characterized in that** the seam (7) of a pipeline (5) is watched and that the strain sensor (8) is provided around the pipeline (5) atop the seam (7).

10. Strain sensor for watching a seam (7) by applying the method according to any of the preceding claims, **characterized in that** it comprises a strip (9) on which an optical fiber (11), provided with Bragg gratings, is fixed in a to-and-fro swerving manner.

11. Sensor according to claim 10, **characterized in that** the strip (9) is a metal foil.

12. Sensor according to claim 11, **characterized in that** the strip (9) is a foil of stainless steel.

13. Sensor according to any of the claims 10 to 12, **characterized in that** the optical fiber (11) is provided in a capillary tube (10) which is fixed on the strip (9).

14. Sensor according to claim 13, **characterized in that** the strip (9) is made of metal and that the capillary tube (10) is welded to this strip (9).

15. Sensor according to any of the claims 10 to 14, **characterized in that** the optical fiber (11) describes a sinusoidal path.
